# FASCICULE DE BREVET EUROPEEN

(11) **EP 0 768 944 B1**
(45) Date de publication et mention de la délivrance du brevet: **11.10.2000**
(21) Numéro de dépôt: 95925008.5
(22) Date de dépôt: 05.07.1995
(51) Int. Cl.: B29C 49/58

(54) **DISPOSITIF D'ETANCHEITE ENTRE UNE EBAUCHE DE RECIPIENT EN MATIERE PLASTIQUE ET UNE TUYERE DE SOUFFLAGE, ET MACHINE DE SOUFFLAGE DE RECIPIENTS POURVUE D'UN TEL DISPOSITIF**
DICHTUNGSVORRICHTUNG ZWISCHEN VORFORM EINES BEHÄLTERS AUS KUNSTSTOFF UND BLASDORN UND EINE SOLCHE DICHTUNGSVORRICHTUNG VERWENDENDE BLASFORMMASCHINE
DEVICE FOR SEALING A PLASTIC CONTAINER PREFORM TO A BLOW MOULDING NOZZLE, AND CONTAINER BLOW MOULDING MACHINE PROVIDED THEREWITH

(30) Priorité: 11.07.1994 FR 9408699
(43) Date de publication de la demande: 23.04.1997
(73) Titulaire: SIDEL S.A., 76053 Le Havre Cédex (FR)
(72) Inventeur: CHAURE, Christophe, F-76053 Le Havre Cédex (FR)
(74) Mandataire: Siloret, Patrick
(86) Numéro de dépôt international: FR9500895
(87) Numéro de publication internationale: WO9601729

(56) Documents cités:
- GB-A- 2 004 805
- GB-A- 2 114 502

## Description

L'invention concerne un dispositif pour assurer l'étanchéité entre une ébauche de récipient en matière plastique et une tuyère de soufflage dans une machine de fabrication de récipients par soufflage, ou étirage et soufflage, de telles ébauches. Elle concerne aussi une machine pourvue d'au moins un tel dispositif.

Dans l'état de la technique, on connaît des machines de fabrication de récipients en matière plastique qui comportent chacune successivement : une section d'entrée de préformes, une section de manipulation des préformes, un four de conditionnement thermique, une section de manipulation des préformes chauffées, une unité de moules équipés de moyens permettant de souffler (généralement après un étirage) les récipients, une section de manipulation de chaque récipient, et une section de sortie des récipients.

Le type de machine décrit ci-dessus permet une fabrication, à l'aide d'une seule étape de soufflage, d'un récipient final à partir d'une préforme.

On connaît aussi des machines permettant de fabriquer des récipients en mettant en oeuvre des procédés dits de double soufflage. Un tel procédé, décrit par exemple dans le brevet français numéro 2 658 119 au nom de la demanderesse, nécessite l'emploi de deux postes constitués chacun par une machine dérivée de celle décrite ci-dessus et reliés entre eux par un convoyeur.

La fabrication d'un récipient comporte les étapes suivantes décrites en détail dans le susdit brevet français:
1/ Dans le premier poste : chauffage d'une préforme, puis soufflage (étirage-soufflage) d'un récipient intermédiaire;
2/ Transfert du récipient intermédiaire au second poste par le convoyeur;
3/ Dans le second poste : traitement thermique particulier appliqué au récipient intermédiaire, puis soufflage du récipient définitif.

Le détail des étapes de fabrication, de même que les avantages d'un procédé par rapport à l'autre sont bien connus de l'homme du métier, et ne constituent pas l'objet de la présente invention. Ils ne seront donc pas décrits plus en détail.

On rappelle encore, pour la compréhension de la présente invention, qu'une préforme est généralement obtenue par injection de matière plastique dans un moule approprié. Le dessin de la préforme et la quantité de matière nécessaire à sa réalisation dépendent du dessin du récipient à souffler. Cependant la structure de base est la même, à savoir que la préforme se présente sous la forme d'un tube ouvert à l'une de ses extrémités et fermé à l'autre.

L'extrémité ouverte et une zone immédiatement adjacente constituent le col de la préforme. La forme du col est habituellement définitive et correspond à celle du col (le goulot dans le cas d'une bouteille) du récipient définitif. Elle n'est donc pas modifiée lors de la ou des étape(s) de soufflage ultérieure(s).

Ainsi, si la préforme est destinée à l'obtention d'un récipient qui sera fermé par un bouchon à vis, le col est pourvu, dès l'injection, d'un filetage qui possède sa forme et ses dimensions définitives. Si, par contre, le récipient doit être fermé à l'aide d'une capsule, le col de la préforme est réalisé avec une forme et des dimensions appropriées.

Par ailleurs, le dessin de la préforme est tel que son démoulage du moule d'injection est aisé. Dans la majorité des cas, la forme du corps au moins est tronconique, le tronc de cône présentant un plus grand diamètre du côté du col que du côté du fond.

L'extrémité fermée constitue le fond de la préforme, et la partie située entre le fond et le col en constitue le corps.

La connaissance de l'existence d'une zone appelée épaule de la préforme, située entre le col et le corps, de même que la connaissance de la façon dont la matière comprise dans le corps et dans le fond de la préforme se répartit pour constituer le corps et le fond du récipient définitif, ne sont pas nécessaires à la compréhension de la présente invention.

Dans la suite de la description, le terme "ébauche" sera employé pour désigner indifféremment une préforme ou un récipient intermédiaire. En effet, une préforme constitue une ébauche pour le récipient définitif ou pour le récipient intermédiaire, selon qu'elle est utilisée dans une machine à simple soufflage ou à double soufflage. De même, le récipient intermédiaire, dans une machine à double soufflage, constitue une ébauche du récipient définitif.

Par ailleurs, dans la suite de la description, le terme "récipient" sera employé pour désigner indifféremment un récipient intermédiaire obtenu dans un procédé à double soufflage (donc à partir d'une ébauche en forme de préforme), ou un récipient définitif obtenu soit dans un procédé à double soufflage (donc à partir d'une ébauche en forme de récipient intermédiaire) soit dans un procédé à simple soufflage (donc à partir d'une ébauche en forme de préforme).

Pour transformer une ébauche en récipient, il est nécessaire d'injecter un fluide à haute pression dans l'ébauche. Le fluide employé est généralement de l'air, et les pressions de soufflage sont comprises entre quelques bars et quelques dizaines de bars, typiquement de l'ordre de quarante bars pour le soufflage d'une bouteille sur les machines de la demanderesse. Des essais ont même été réalisés avec des pressions beaucoup plus élevées encore.

Le fluide est injecté dans l'ébauche par l'intermédiaire d'une tuyère de soufflage. Celle-ci comporte au moins un orifice d'amenée du fluide sous pression dans l'ébauche, orifice qui est par ailleurs en communication avec une source d'alimentation en fluide, telle qu'un compresseur, une réserve, ou tout autre moyen adapté.

Les tuyères connues comportent un nez de soufflage, qui est introduit dans l'embouchure du col de l'ébauche lors du soufflage. Le nez est habituellement tronconique, avec un diamètre à la base du tronc de cône légèrement inférieur ou égal au diamètre de l'embouchure du col de l'ébauche, et donc un diamètre au sommet encore plus restreint. Le sommet du tronc de cône constitue une extrémité libre de la tuyère, alors que la base du tronc de cône est reliée à la machine et donc à la source d'alimentation en fluide par l'intermédiaire d'un corps de tuyère. Le corps et le nez de tuyère peuvent être usinés dans la même pièce, ou usinés dans des pièces différentes, l'une étant rapportée sur l'autre dans ce cas. Une excroissance annulaire constituée par un usinage, ou une joue constituée par la face du corps en contact avec le nez de tuyère, entoure la totalité de la base de ce dernier. Cette excroissance, ou joue, a pour fonction, d'une part de limiter la distance d'insertion du nez dans l'ébauche, et d'autre part, d'assurer l'étanchéité entre l'intérieur et l'extérieur de l'ébauche au moment du soufflage.

A cet effet, après que l'ébauche a été placée dans le moule, le nez de tuyère est introduit dans l'embouchure jusqu'à ce que l'excroissance ou la joue vienne au contact du buvant de l'ébauche, et une force d'appui déterminée est exercée pour compenser la pression de soufflage.

Néanmoins, cette structure présente des inconvénients car elle ne permet pas toujours d'assurer une étanchéité absolue, ce qui peut avoir pour conséquence selon les cas soit une moindre efficacité, soit une totale inefficacité du soufflage.

En effet, puisque l'étanchéité est assurée essentiellement par la pression exercée entre le buvant et la joue, ou l'excroissance, il est clair qu'un défaut de surface sur le buvant, tel qu'un creux, dû par exemple à un choc lors du stockage des préformes, ou un léger manque de matière lors de l'injection, ou un défaut de planéité du buvant, peut être la cause d'une fuite. Les risques sont d'autant plus importants que le diamètre du col est important.

Une solution connue du document GB-A-2 004 805 consiste à pourvoir la tuyère d'un joint qui s'intercale entre la joue ou l'excroissance et le buvant. On aboutit très rapidement à un matage et une destruction du joint, d'une part parce qu'il faut exercer une force d'appui importante pour compenser les fortes pressions de soufflage et, d'autre part, en raison de la répétitivité des opérations de soufflage : on rappelle en effet qu'avec certaines machines connues, plus de mille récipients par heure peuvent être soufflés dans chaque moule: en d'autres termes, ceci signifie qu'une tuyère doit être successivement associée à plus de mille ébauches par heure.

L'invention a donc pour but un dispositif qui, d'une part permette d'assurer de façon fiable l'étanchéité entre une tuyère de soufflage et chaque ébauche à laquelle elle doit être associée et, d'autre part, résiste correctement à des utilisations répétitives.

Selon l'invention, un dispositif pour assurer l'étanchéité entre une tuyère de soufflage et une ébauche, dans une machine de soufflage de récipients, l'ébauche comportant un col et une embouchure non modifiés lors de la phase de soufflage, la tuyère étant introduite dans l'embouchure avant le soufflage et retirée après, est caractérisé en ce qu'il comporte des moyens d'étanchéité portés par la tuyère et agencés pour pouvoir prendre au moins deux positions, une première position empêchant qu'ils soient au contact d'une ébauche pendant la mise en place de la tuyère, et une seconde position dans laquelle ils assurent l'étanchéité entre l'ébauche et la tuyère, et en ce qu'il comporte des moyens pour faire passer les moyens d'étanchéité de la première à la seconde position après que la tuyère a été totalement introduite dans l'ébauche.

Ainsi, puisque les moyens d'étanchéité ne sont pas au contact de l'ébauche pendant la mise en place de la tuyère, ils ne peuvent pas être détériorés durant cette phase. De plus, puisqu'ils sont placés dans leur seconde position seulement après que la tuyère a été totalement introduite dans l'ébauche, en aucun cas ils ne peuvent être comprimés entre le buvant du col de l'ébauche et une partie de la tuyère, de sorte qu'ils ne subissent pas une action de matage ou d'emporte-pièce exercée entre le buvant et la tuyère.

Il en résulte que les buts de l'invention sont atteints d'une manière extrêmement simple.

Selon une autre caractéristique de l'invention, le dispositif est agencé pour que les moyens d'étanchéité reviennent automatiquement de la seconde à la première position lors du retrait de la tuyère, et demeurent de façon stable en cette première position tant que la tuyère n'a pas été totalement introduite dans une nouvelle ébauche.

Ainsi, les moyens d'étanchéité ne peuvent pas retourner accidentellement en seconde position tant qu'une nouvelle ébauche n'est pas en place, ce qui augmente encore la fiabilité du dispositif.

Selon une autre caractéristique, les moyens d'étanchéité sont placés de la première à la seconde position au moyen du fluide de présoufflage lorsqu'un présoufflage est effectué, ou à l'aide du fluide de soufflage en cas de non-existence d'un présoufflage.

Ainsi, aucun dispositif mécanique annexe n'est nécessaire, ce qui réduit les coûts de fabrication et contribue à la simplicité du dispositif.

Selon une autre caractéristique, les moyens d'étanchéité sont portés par le nez de tuyère.

D'autres caractéristiques et avantages de l'invention apparaîtront à la lecture de la description qui va suivre, faite en regard des figures annexées sur lesquelles
- les figures 1 et 2 sont des vues en coupe schématique d'une partie d'une machine équipée d'un dispositif conforme à l'invention, selon un premier mode de réalisation, avec les moyens d'étanchéité, respectivement dans leur première (figure 1) et seconde (figure 2) position ;
- les figures 3 et 4 sont des vues en coupe schématique d'une partie d'une machine équipée d'un dispositif conforme à l'invention, selon un mode de réalisation préféré, avec les moyens d'étanchéité respectivement dans leur première (figure 3) et seconde (figure 4) position;
- la figure 5 est une vue d'un mode de réalisation préféré de l'extrémité, destinée à être introduite dans l'embouchure d'une ébauche, d'une tuyère équipée d'un dispositif selon l'invention.

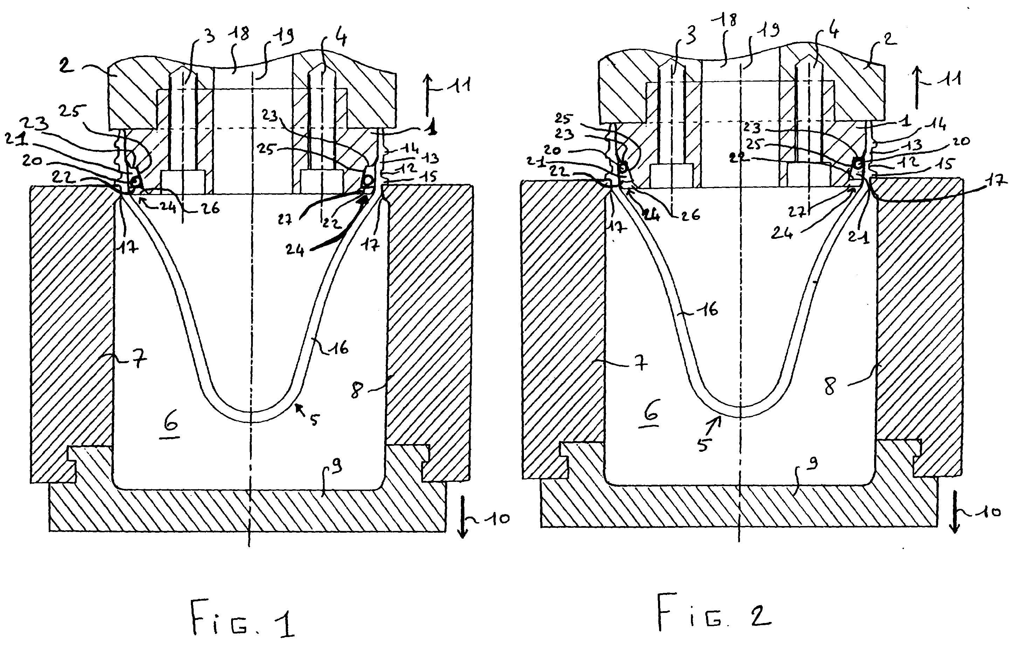

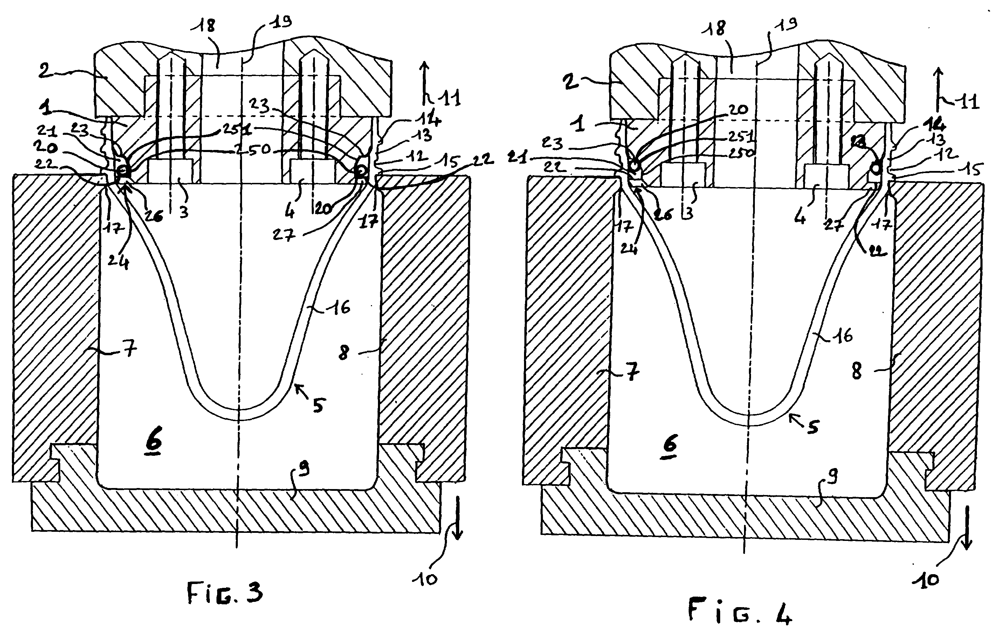

La partie de machine représentée sur les figures 1 ou 2 comporte une tuyère 1 portée par un support 2 la reliant au châssis, non représenté, de la machine, par exemple à l'aide des vis 3,4.

Le nez de la tuyère 1, c'est-à-dire sa partie destinée à pénétrer dans l'embouchure du col d'une ébauche, pour permettre son soufflage, est représenté sur ces figures en position d'insertion dans une ébauche 5 qui, dans l'exemple illustré, est une préforme pour la réalisation d'un pot. L'ébauche 5 est par ailleurs représentée en place dans un moule 6 de soufflage constitué de façon connue de deux demi-moules 7, 8 et d'un fond 9 de moule. Divers moyens connus, non représentés, permettent d'écarter les demi-moules 7, 8, d'éloigner le fond 9 de moule dans le sens illustré par la flèche 10, et d'éloigner la tuyère 1 dans le sens illustré par la flèche 11 lors de la mise en place d'une nouvelle ébauche ou lors du retrait du récipient.

De façon connue encore, la mise en place d'une ébauche ou le retrait d'un récipient s'effectuent par exemple à l'aide de pinces de transfert, non représentées, qui saisissent l'ébauche ou le récipient par exemple au niveau d'un évidement annulaire 12 réalisé dans le col 13 de l'ébauche ou du récipient. On rappelle que le col 13 est conformé à sa forme et ses dimensions définitives lors de la réalisation de l'ébauche 5 et donc que l'évidement annulaire du récipient est le même que celui 12 de l'ébauche.

Dans l'exemple illustré, un filetage 14 entoure le col 13 entre son buvant et l'évidement annulaire 12. Il permet le vissage d'un couvercle sur le récipient définitif.

Bien entendu, à la place des filets peuvent se trouver d'autres moyens pour permettre la fixation de tout autre type de fermeture.

Enfin, et de façon connue également, une collerette 15 entoure la partie du col 13 la plus éloignée du buvant, c'est-à-dire celle qui se trouve, dans l'exemple illustré, au-delà de l'évidement annulaire 12.

De façon connue en soi, le col 13 et la collerette 15 sont à l'extérieur du moule 6 alors que le corps 16 de l'ébauche 5 est à l'intérieur pendant les phases de soufflage. Pour cela, lorsque les demi-moules 7, 8 et le fond 9 de moule sont en position de soufflage, le moule présente une ouverture 17, opposée au fond 9 de moule pour permettre la mise en place de l'ébauche 5 dans la position qui vient d'être indiquée par rapport au moule. Lorsque la tuyère 1 est en place, la collerette 15 se trouve en appui sur le rebord extérieur de l'ouverture 17 du moule, empêchant l'ébauche 5 d'être chassée à l'intérieur du moule sous l'action de la tige d'élongation (ou d'étirage) et sous l'effet des hautes pressions de soufflage.

Enfin, et de façon connue également, la tuyère 1 est pourvue d'un orifice 18 centré sur son axe 19, pour le passage d'une part de la tige d'élongation (non représentée sur les figures 1 et 2) et d'autre part du fluide de soufflage.

Conformément à l'invention, la tuyère 1 est pourvue d'un dispositif avec des moyens d'étanchéité pouvant occuper deux positions, une première illustrée par la figure 1 et une seconde illustrée par la figure 2.

Dans l'exemple illustré par les figures 1 et 2, les moyens d'étanchéité sont constitués par un joint torique 20. le joint est placé dans un logement annulaire 21, en forme de gorge usinée à la périphérie de la tuyère 1. La gorge est située dans une zone de la tuyère 1 se trouvant en regard de la paroi intérieure du col 13 de l'ébauche 5 lorsque la tuyère lest entièrement insérée dans le col 13.

La gorge 21 comporte deux parois latérales opposées 22, 23, parallèles entre elles et perpendiculaires à l'axe 19 central de la tuyère, dans l'exemple illustré par ces figures 1 et 2.

Une première paroi 22 est à proximité de l'extrémité libre du nez de tuyère, c'est-à-dire celle qui est insérée dans l'embouchure du col;
la seconde paroi 23 est donc située entre la première 22 et l'extrémité de la tuyère 1 reliée au support 2.

En fait, la première paroi 22 est constituée à l'aide d'un rebord annulaire 24 entourant l'extrémité libre du nez de tuyère 1. Ce rebord est obtenu lors de l'usinage de la gorge. De préférence, comme illustré par les figures 1 et 2, la périphérie de ce rebord annulaire 24 est inclinée ou incurvée par rapport à l'axe 19 central de la tuyère, de sorte que le diamètre extérieur de ce rebord annulaire mesuré à proximité de l'extrémité libre de la tuyère 1 est inférieur à celui mesuré au niveau de la gorge 21.

Ainsi, dans le mode de réalisation des figures 1 et 2, la périphérie du rebord annulaire 24 est tronconique, le plan de base du tronc de cône se situant au niveau de la première paroi 22, le plan de sommet du tronc de cône étant confondu avec celui de l'extrémité libre de la tuyère.

Enfin, le plus grand diamètre de la périphérie du rebord annulaire, celui à la base du tronc de cône, dans l'exemple des figures 1 et 2, est très légèrement inférieur au diamètre intérieur de chaque partie du col 13 de l'ébauche 5 devant passer en regard de ce rebord lors de la mise en place de la tuyère 1 dans l'embouchure du col 13.

Cette structure combinée entre la forme de la périphérie du rebord annulaire et le plus grand diamètre de ce rebord permet une insertion aisée de la tuyère 1 dans le col 13, de même que son retrait aisé, sans détérioration du col.

Une troisième paroi 25, constituant le fond de la gorge, relie les deux premières. Cette troisième paroi ou fond 25 est inclinée par rapport à l'axe 19 de la tuyère 1, de façon telle que la profondeur de la gorge 21 à proximité de la première paroi 22 est supérieure à celle à proximité de la seconde 23. En outre, la distance entre la première 22 et la seconde 23 paroi de la gorge 21 est supérieure à l'épaisseur du joint, de sorte que le joint peut être déplacé dans la gorge de la première vers la seconde paroi et inversement.

De plus, la profondeur de la gorge 21 à proximité de la première paroi est telle que lorsque le joint est simultanément au contact de la première paroi 22 et du fond 25 de la gorge, il est complètement effacé dans la gorge, c'est-à-dire qu'il est complètement masqué par le rebord annulaire 24, comme illustré par la figure 1.

Dans une mise en oeuvre de l'invention, le diamètre intérieur du joint 20 est tel que, lorsqu'il est au contact de la première paroi 22 de la gorge 21, il entoure librement la paroi 25 de fond, c'est-à-dire qu'il n'est pas étiré par cette dernière. Par contre, dès qu'il est déplacé en direction de la seconde paroi 23, il vient très rapidement en appui de plus en plus prononcé sur la paroi de fond 25, en raison de la réduction progressive de la profondeur de la gorge 21 entre la première 22 et la seconde paroi 23, cette réduction ayant pour corollaire une augmentation progressive du diamètre de la zone de la tuyère 1 constituant le fond 24 qu'entoure le joint.

Dans une variante, le joint 20 est en appui sur la paroi 25 de fond, et est donc plus ou moins étiré, même lorsqu'il est au contact de la première paroi 22. Il en résulte que plus le joint est déplacé en direction de la seconde paroi, plus l'appui sur le fond est prononcé.

Par ailleurs, quel que soit l'état - étiré ou non - du joint 20, lorsqu'il est au contact de la première paroi 22, la profondeur de la gorge 21 et l'épaisseur du joint sont telles que, lorsqu'une ébauche 5 est présente et que le joint est progressivement éloigné de la première paroi 22 pour être rapproché de la seconde 23, tout en restant en appui sur le fond 25, il finit par émerger de la gorge 21 et donc de la périphérie du nez de tuyère, et vient alors au contact de la paroi interne du col 13 de l'ébauche 5. Ainsi, puisque le joint est pris simultanément entre le fond 25 de gorge et la paroi interne du col de l'ébauche, l'étanchéité est assurée.

La figure 2 montre la seconde position du joint, c'est-à-dire la position d'étanchéité qui vient d'être décrite. Hormis cette position du joint, la figure 2 comporte les mêmes éléments et les mêmes références que la figure 1.

Le déplacement du joint de la première position à la seconde est assuré à l'aide du fluide de présoufflage, au cas où un présoufflage existe, ou du fluide de soufflage. On rappelle que le fluide est injecté dans l'ébauche 5 par l'orifice 18 central de la tuyère qui permet également le passage d'une tige d'élongation, non représentée, car connue en soi et pas concernée par l'invention.

Pour que le fluide puisse repousser le joint, il faut qu'il puisse facilement pénétrer dans la gorge 21.

A cet effet, le rebord 24 sur lequel est réalisée la première paroi 22 est pourvu de fentes et/ou de trous et/ou de tout autre moyen permettant à une partie du fluide ayant été injecté dans l'ébauche de pénétrer dans la gorge et de repousser le joint vers la seconde position grâce à la pression exercée par le fluide.

De préférence, les fentes, trous et/ou autres moyens sont régulièrement répartis et suffisamment nombreux à la périphérie du rebord 24, pour que le joint soit uniformément repoussé en tous points de sa périphérie.

Le plan de coupe des figures 1 et 2 est supposé passer au milieu de deux fentes diamétralement opposées 26, 27 qui sont donc visibles sur ces figures (zones non hachurées du rebord 24 sous la première paroi 22).

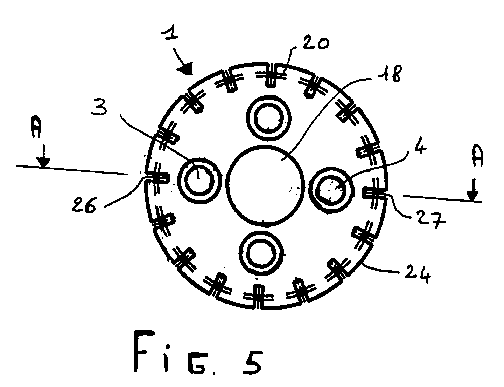

La figure 5 montre de face un mode de réalisation possible de l'extrémité libre d'un nez de tuyère dont le rebord périphérique déterminant la première paroi 22 (non visible sur cette figure car se trouvant derrière) est pourvu de fentes régulièrement réparties à sa périphérie. A supposer que ce mode de réalisation soit celui applicable au dispositif des figures 1 et 2, et que le plan de coupe des figures 1 et 2 soit déterminé par la ligne A-A prévue sur cette figure 5, on retrouve alors sur cette figure le rebord périphérique 24, l'orifice central 18 de la tuyère, les deux vis 3 et 4 et les deux fentes 26, 27 mentionnées auparavant.

Dans l'exemple illustré, seize fentes au total sont visibles. Leur nombre peut varier en fonction du diamètre du nez de tuyère, un nez de plus petit diamètre ne permettant pas de réaliser autant de fentes qu'un nez de diamètre supérieur.

Lorsque la pression de fluide est présente, le joint 20 roule sur la pente tronconique limitant le fond de gorge et vient finalement se coincer entre le fond de gorge 21 et la paroi interne du col de l'ébauche, assurant l'étanchéité.

Lorsque la pression de fluide est relâchée, après que le récipient a été soufflé, le joint, puisqu'il est coincé, reste en place.

Le retour à la première position est tout simplement provoqué par le retrait de la tuyère hors du col: puisqu'après soufflage le joint demeure coincé entre l'ébauche et la tuyère, le mouvement de retrait provoque naturellement un déplacement relatif du joint 20 par rapport à l'ébauche d'une part et à la tuyère d'autre part, le déplacement sur l'ébauche se faisant spontanément en direction de la première paroi 22, c'est-à-dire vers la première position.

Les figures 3 et 4 illustrent un mode préféré de réalisation de l'invention. Elles sont identiques entre elles, à la position du joint près. La figure 3 montre le cas où le joint n'assure pas l'étanchéité; la figure 4 montre le cas où le joint assure l'étanchéité.

Par ailleurs, la différence entre le mode préféré de réalisation apparaissant sur ces figures 3 et 4 et le mode de réalisation apparaissant sur les figures 1 et 2 est minime : elle concerne simplement la forme de la gorge, en particulier celle du fond de cette gorge. Aussi, les mêmes éléments que ceux des figures 1 et 2 portent les mêmes références et ne sont pas décrits à nouveau.

La gorge 210 est limitée par une première paroi 22, une seconde 23 et un fond 250, 251.

Le fond, au lieu d'être constitué par un rebord tronconique comme celui 25 des figures 1 et 2, est constitué de deux parties. Une première partie 250 est constituée par un tronc de cylindre centré sur l'axe 19 de la tuyère.

La seconde partie 251 relie la première partie 250 et la seconde paroi 23 de la gorge. Cette seconde partie 251 est tronconique; le sommet du tronc de cône est constitué par la jonction entre les première et seconde parties et la base du tronc de cône est portée par la seconde paroi 23.

La hauteur de la première partie 251 cylindrique, mesurée entre la première paroi 22 et la seconde partie 251 tronconique est au moins égale à la moitié de l'épaisseur du joint 20.

Ainsi, dans le mode de réalisation illustré par les figures 3 et 4, la hauteur de cette première partie 250 est à peu près égale aux trois-quarts de l'épaisseur du joint torique 20.

La présence de cette partie cylindrique 250 permet de provoquer, au moment du soufflage, une accélération du joint 20 l'aidant à passer plus facilement de la première à la seconde position, alors qu'avec le mode de réalisation des figures 1 et 2, il subit immédiatement une décélération due à l'étirage provoqué par la forme seulement tronconique du fond de gorge.

La description qui a été faite de la figure 5 en lien avec les figures 1 et 2 est aussi applicable aux figures 3 et 4 si on suppose que le nez de tuyère représenté sur la figure 5 est aussi applicable au dispositif des figures 3 et 4. Il n'est donc pas nécessaire de revenir dessus, de même qu'il n'est pas nécessaire de revenir sur le fonctionnement du dispositif des figures 3 et 4 qui est identique en tous points à celui des figures 1 et 2.

L'invention permet donc de résoudre de façon simple tous les problèmes d'étanchéité se posant au moment du soufflage entre une ébauche et une tuyère. Les moyens d'étanchéité, tels que le joint 20, ne subissent pas d'action statique, tel qu'un appui de buvant, susceptible de les détériorer. Ils n'agissent que sous l'effet des pressions dynamiques rencontrées lors du soufflage. Par ailleurs, le retrait du récipient n'est pas susceptible de les détériorer.

Bien entendu, l'invention n'est pas limitée aux modes de réalisation décrits et revendiqués ci-après. Elle en englobe toutes les variantes à la portée de l'homme du métier. Ainsi, par exemple, les formes décrites des fonds de gorges ne doivent pas être considérées comme limitatives, l'essentiel étant que les moyens d'étanchéité aient une position dans laquelle ils ne sont pas au contact de l'ébauche lors de l'insertion de la tuyère. On peut donc envisager, au lieu de fonds de gorges tronconiques, des fonds curvilignes, par exemple.

## Revendications

1. Dispositif pour assurer l'étanchéité entre une tuyère (1) de soufflage et une ébauche (5) de récipient, dans une machine de soufflage de récipients, l'ébauche comportant un col (13) et une embouchure non modifiés lors d'un soufflage, la tuyère (1) étant introduite dans l'embouchure avant le soufflage et retirée après, caractérisé en ce qu'il comporte des moyens d'étanchéité (20) portés par la tuyère (1) et agencés pour pouvoir prendre au moins deux positions, une première position empêchant qu'ils soient au contact d'une ébauche lors de la mise en place de la tuyère et une seconde position dans laquelle ils assurent l'étanchéité entre l'ébauche et la tuyère, et en ce qu'il comporte des moyens (18, 21, 26, 27) pour faire passer les moyens d'étanchéité de la première à la seconde position après que la tuyère a été totalement introduite dans l'ébauche.

2. Dispositif selon la revendication 1, caractérisé en ce qu'il est agencé pour que les moyens d'étanchéité (20) reviennent automatiquement de la seconde à la première position lors du retrait de la tuyère (1), et demeurent de façon stable en cette première position tant que la tuyère n'est pas introduite dans une ébauche.

3. Dispositif selon l'une quelconque des revendications 1 ou 2 précédentes, caractérisé en ce que les moyens d'étanchéité (20) sont déplacés de la première à la seconde position au moyen du fluide de présoufflage, lorsqu'un présoufflage est effectué, ou à l'aide du fluide de soufflage en cas de non présoufflage.

4. Dispositif selon l'une des revendications 1 à 3 précédentes, caractérisé en ce que les moyens d'étanchéité sont portés par le nez de la tuyère (1), c'est-à-dire la partie de tuyère pénétrant dans le col (13) de l'ébauche (5).

5. Dispositif selon l'une quelconque des revendications 1 à 4 précédentes, caractérisé en ce que les moyens d'étanchéité sont constitués par un joint torique (20) disposé dans une gorge (21) annulaire ménagée à la périphérie du nez de la tuyère (1); la gorge (21) est limitée par une première paroi latérale (22) proche de l'extrémité libre, c'est-à-dire celle qui pénètre en premier dans une ébauche (5), du nez de la tuyère, par une seconde paroi latérale (23) plus éloignée de l'extrémité libre que la première (22) et par un fond (25;250,251) reliant les deux parois entre elles; la distance entre les deux parois latérales (22,23) est supérieure à l'épaisseur du joint, de sorte que celui-ci peut être déplacé en direction d'une paroi latérale ou de l'autre; la profondeur de la gorge (21) à la jonction entre la première paroi latérale (22) et le fond (25; 250,251) est telle que lorsque le joint repose à la fois sur le fond et contre cette première paroi, il est totalement effacé dans la gorge (21); la profondeur de la gorge (21) à la jonction entre la seconde paroi (23) et le fond (25; 250,251) est telle que lorsque le joint repose sur le fond et est rapproché de cette seconde paroi, il émerge de la périphérie de la tuyère de sorte que lorsqu'une ébauche est présente, il est à la fois au contact de l'ébauche et du fond de la gorge.

6. Dispositif selon les revendications 3 et 5, caractérisé en ce que la tuyère (1) est percée d'au moins un orifice (8) débouchant sur l'extrémité libre de son nez pour injecter le fluide dans l'ébauche, et en ce que la première paroi (22) est constituée par un rebord annulaire (24) à la périphérie de cette extrémité libre; le dit rebord est pourvu d'au moins un orifice ou fente (26,27) pour faire passer du fluide sous pression de l'ébauche dans la gorge (21) afin de repousser le joint de la première à la seconde position.

7. Dispositif selon la revendication 6, caractérisé en ce que le rebord (24) est pourvu de plusieurs orifices (26,27) répartis régulièrement sur sa périphérie.

8. Dispositif selon l'une des revendications 5 à 7, caractérisé en ce que le fond (25) de la gorge est tronconique, la base du tronc de cône étant déterminée par la jonction du fond avec la seconde paroi (23), et le sommet étant déterminé par la jonction du fond avec la première paroi(22).

9. Dispositif selon l'une des revendications 5 à 7, caractérisé en ce que le fond de la gorge présente deux parties, une première (250) cylindrique et une seconde (251) tronconique; la première partie est entre la première paroi (22) et la seconde partie (251); la seconde partie est entre la seconde paroi (23) et la première partie (250); la base du tronc de cône est déterminée par la jonction entre la seconde partie (251) et la seconde paroi (23) et le sommet du tronc de cône est déterminé par la jonction entre la seconde partie et la première.

10. Dispositif selon la revendication 9, caractérisé en ce que la hauteur de la partie cylindrique (250) est au moins égale à la moitié de l'épaisseur du joint.

11. Machine de fabrication de récipients, par soufflage d'une ébauche (5) en matière plastique, caractérisée en ce qu'elle comporte au moins un dispositif selon l'une des revendications 1 à 10.

## Claims

1. Device for establishing a seal between a blow-moulding nozzle (1) and a container preform (5) in a container blow-moulding machine, the preform comprising a neck (13) and a mouth which are not altered during blow moulding, the nozzle (1) being introduced into the mouth prior to blow moulding and retracted afterwards, characterized in that it comprises sealing means (20) borne by the nozzle (1) and designed to be able to adopt at least two positions, a first position preventing them from being in contact with a preform during the insertion of the nozzle and a second position in which they seal between the preform and the nozzle, and in that it comprises means (18, 21, 26, 27) for causing the sealing means to move from the first to the second position once the nozzle has been fully introduced into the preform.

2. Device according to Claim 1, characterized in that it is designed so that the sealing means (20) return automatically from the second to the first position when the nozzle (1) is withdrawn, and remain stably in this first position as long as the nozzle is not introduced into a preform.

3. Device according to any one of the preceding Claims 1 and 2, characterized in that the sealing means (20) are moved from the first to the second position by means of the pre-blow fluid when pre-blowing is performed, or using the blow-moulding fluid when there is no pre-blowing operation.

4. Device according to one of the preceding Claims 1 to 3, characterized in that the sealing means are borne by the snout of the nozzle (1), that is to say the part of the nozzle which enters the neck (13) of the preform (5).

5. Device according to any one of the preceding Claims 1 to 4, characterized in that the sealing means consist of an O-ring seal (20) arranged in an annular groove (21) formed at the periphery of the snout of the nozzle (1); the groove (21) is bounded by a first side wall (22) close to the free end, that is to say close to the end of the snout of the nozzle which enters a preform (5) first, by a second side wall (23) further from the free end than the first (22) and by a bottom (25; 250, 251) connecting the two walls together; the distance between the two side walls (22, 23) is greater than the thickness of the seal, so that the latter can be moved toward one side wall or the other; the depth of the groove (21) at the junction between the first side wall (22) and the bottom (25; 250, 251) is such that when the seal rests both against the bottom and against this first wall, it is completely retracted into the groove (21); the depth of the groove (21) at the junction between the second wall (23) and the bottom (25; 250, 251) is such that when the seal rests against the bottom and is brought up close to this second wall, it protrudes from the periphery of the nozzle so that when a preform is present, it is both in contact with the preform and with the bottom of the groove.

6. Device according to Claims 3 and 5, characterized in that the nozzle (1) is pierced with at least one orifice (8) opening to the free end of its snout so as to inject the fluid into the preform, and in that the first wall (22) consists of an annular rim (24) at the periphery of this free end; the said rim has at least one orifice or slot (26, 27) for passing the pressurized fluid from the preform into the groove (21) so as push the seal back from the first into the second position.

7. Device according to Claim 6, characterized in that the rim (24) has a number of orifices (26, 27) evenly distributed about its periphery.

8. Device according to one of Claims 5 to 7, characterized in that the bottom (25) of the groove is frustoconical, the base of the cone frustum being determined by the junction between the bottom and the second wall (23), and the vertex being determined by the junction between the bottom and the first wall (22).

9. Device according to one of Claims 5 to 7, characterized in that the bottom of the groove is in two parts, a cylindrical first part (250) and a frustoconical second part (251); the first part is between the first wall (22) and the second part (251); the second part is between the second wall (23) and the first part (250); the base of the cone frustum is determined by the junction between the second part (251) and the second wall (23) and the vertex of the cone frustum is determined by the junction between the second part and the first.

10. Device according to Claim 9, characterized in that the height of the cylindrical part (250) is at least equal to half the thickness of the seal.

11. Machine for manufacturing containers by blow moulding a plastic preform (5) characterized in that it comprises at least one device according to one of Claims 1 to 10.

## Patentansprüche

1. Vorrichtung zur Gewährleistung der Dichtigkeit zwischen einer Blasdüse (1) und einem Rohling (5) eines Behälters in einer Behälterblasformmaschine, wobei der Rohling einen Hals (13) und eine sich während des Blasformens nicht verändernde Mündung aufweist, wobei die Düse (1) vor dem Blasformen in die Mündung eingeführt und danach herausgezogen wird, dadurch gekennzeichnet, daß sie an der Düse (1) vorgesehene Dichtungsmittel (20) aufweist, die so angeordnet sind, daß sie mindestens zwei Positionen einnehmen können, und zwar eine erste Position, in der verhindert wird, daß sie während der Anordnung der Düse einen Rohling berühren, und einer zweiten Position, in der sie die Dichtigkeit zwischen dem Rohling und der Düse gewährleisten, und daß sie Mittel (18, 21, 26, 27) zur Bewegung der Dichtigkeitsmittel aus der ersten in die zweite Position nach dem vollständigen Einführen der Düse in den Rohling aufweist.

2. Vorrichtung nach Anspruch 1, dadurch gekennzeichnet, daß sie so angeordnet ist, daß die Dichtigkeitsmittel (20) automatisch aus der zweiten in die erste Position zurückkehren, wenn die Düse (1) zurückgezogen wird, und so lange stabil in der ersten Position bleiben, wie die Düse nicht in einen Rohling eingeführt wird.

3. Vorrichtung nach Anspruch 1 oder 2, dadurch gekennzeichnet, daß die Dichtigkeitsmittel (20) bei Durchführung eines Vorblasformens mittels des Vorblasfluids oder, wenn kein Vorblasformen durchgeführt wird, mit Hilfe des Blasfluids aus der ersten in die zweite Position bewegt werden.

4. Vorrichtung nach einem der Ansprüche 1 bis 3, dadurch gekennzeichnet, daß die Dichtigkeitsmittel an dem Mundstück der Düse (1) vorgesehen sind, das heißt an dem Teil der Düse, der in den Hals (13) des Rohlings (5) eindringt.

5. Vorrichtung nach einem der vorhergehen den Ansprüche 1 bis 4, dadurch gekennzeichnet, daß die Dichtigkeitsmittel aus einem O-Ring (20) bestehen, der in einer in dem Umfang des Mundstücks der Düse (1) ausgebildeten, ringförmigen Kehle (21) angeordnet ist; die Kehle (21) durch eine sich nahe dem freien Ende des Düsenmundstücks befindende erste Seitenwand (22), das heißt jene, die als erste in einen Rohling (5) eindringt, durch eine sich weiter als die erste (22) von dem freien Ende entfernt befindende zweite Seitenwand (23) und durch einen Boden (25; 250; 251), der die beiden Wände miteinander verbindet, begrenzt wird; wobei der Abstand zwischen den beiden Seitenwänden (22, 23) größer ist als die Dicke des O-Rings, so daß dieser in Richtung einer der Seitenwände bewegt werden kann; die Tiefe der Kehle (21) an der Verbindung zwischen der ersten Seitenwand (22) und dem Boden (25; 250, 251) derart ist, daß der O-Ring, wenn er gleichzeitig am Boden und an dieser ersten Wand anliegt, vollständig in der Kehle (21) verschwunden ist; die Tiefe der Kehle (21) an der Verbindung zwischen der zweiten Wand (23) und dem Boden (25; 250, 251) derart ist, daß der O-Ring, wenn er am Boden anliegt und dieser zweiten Wand angenähert ist, aus dem Umfang der Düse auftaucht, so daß er, wenn ein Rohling vorhanden ist, gleichzeitig mit dem Rohling und dem Boden der Kehle in Kontakt ist.

6. Vorrichtung nach den Ansprüchen 3 und 5, dadurch gekennzeichnet, daß die Düse (1) mit mindestens einer Öffnung (8) versehen ist, die in dem freien Ende ihres Mundstücks mündet, damit Fluid in den Rohling injiziert werden kann, und daß die erste Wand (22) aus einem ringförmigen Rand (24) am Umfang dieses freien Endes gebildet ist; der Rand mit mindestens einer Öffnung oder einem Schlitz (26, 27) versehen ist, damit druckbeaufschlagtes Fluid von dem Rohling in die Kehle (21) geleitet werden kann, um den O-Ring aus der ersten in die zweite Position zu schieben.

7. Vorrichtung nach Anspruch 6, dadurch gekennzeichnet, daß der Rand (24) mit mehreren Öffnungen (26, 27) versehen ist, die gleichmäßig um seinen Umfang verteilt sind.

8. Vorrichtung nach einem der Ansprüche 5 bis 7, dadurch gekennzeichnet, daß der Boden (25) der Kehle kegelstumpfförmig ist, wobei die Basis des Kegelstumpfes durch die Verbindung des Bodens mit der zweiten Wand (23) und der Scheitel durch die Verbindung des Bodens mit der ersten Wand (22) definiert wird.

9. Vorrichtung nach einem der Ansprüche 5 bis 7, dadurch gekennzeichnet, daß der Boden der Kehle zwei Teile aufweist, und zwar einen zylindrischen ersten Teil (250) und einen kegelstumpfförmigen zweiten Teil (251); der erste Teil zwischen der ersten Wand (22) und dem zweiten Teil (251) liegt; der zweite Teil zwischen der zweiten Wand (23) und dem ersten Teil (250) liegt; die Basis des Kegelstumpfes durch die Verbindung zwischen dem zweiten Teil (251) und der zweiten Wand (23) und der Scheitel des Kegelstumpfes durch die Verbindung zwischen dem zweiten Teil und dem ersten definiert wird.

10. Vorrichtung nach Anspruch 9, dadurch gekennzeichnet, daß die Höhe des zylindrischen Teils (250) mindestens gleich der halben Dicke des O-Rings ist.

11. Maschine zur Herstellung von Behältern durch Blasformen eines Rohlings (5) aus Kunststoff, dadurch gekennzeichnet, daß sie mindestens eine Vorrichtung nach einem der Ansprüche 1 bis 10 umfaßt.
